# EUROPEAN PATENT APPLICATION

(11) **EP 4 622 393 A1**
(43) Date of publication of application: **24.09.2025**
(21) Application number: 23890786.9
(22) Date of filing: 14.11.2023
(51) Int. Cl.: H05B 45/34

(54) **DIRECT-CURRENT CENTRALIZEDLY-DRIVEN LIGHTING SYSTEM**

(30) Priority: 16.11.2022 CN 202211430373
(71) Applicant: Shenzhen Mingjiuzhou Lighting Technology Co., Ltd, Shenzhen, Guangdong 518132 (CN); Nanning Mingjiuzhou Lighting Technology Co., Ltd, Nanning, Guangxi 530006 (CN)
(72) Inventor: LUO, Wuning, Nanning, Guangxi 530006 (CN); LU, Lan, Nanning, Guangxi 530006 (CN); LUO, Ya, Nanning, Guangxi 530006 (CN)
(74) Representative: Patentanwälte Olbricht Buchhold Keulertz
(86) International application number: PCT/CN2023/131614
(87) International publication number: WO 2024/104353

(57) **Abstract**

The present invention discloses a direct-current centralized-driving lighting system, including a constant current power supply, a positive electrode connection wire, a negative electrode connection wire, a positive electrode wire I, a negative electrode wire I, a positive electrode wire II, and a negative electrode wire II. A positive electrode of the constant current power supply is connected to the positive electrode wire I via the positive electrode connection wire, a negative electrode of the constant current power supply is connected to the negative electrode wire II via the negative electrode connection wire, the positive electrode wire II is connected in parallel to the positive electrode wire I, and the negative electrode wire II is connected in parallel to the negative electrode wire I. The direct-current centralized-driving lighting system solves the problem of voltage drop in an intermediate LED lamp in the prior art.

## Description

### CROSS-REFERENCE TO RELATED APPLICATIONS

The present application claims priority to Chinese Patent Application No. CN202211430373.3, filed on November 16, 2022 and entitled "DIRECT-CURRENT CENTRALIZED-DRIVING LIGHTING SYSTEM", which is incorporated herein by reference in its entirety.

### TECHNICAL FIELD

The present invention relates to the technical field of lighting, and in particular, to a direct-current centralized-driving lighting system.

### BACKGROUND

Currently, lighting sources used in lighting systems have developed from early incandescent lamps, fluorescent lamps, halogen lamps, and the like to LED lamps. The LED lamps have the advantages of high luminous efficiency, low power consumption, and so on, and are widely used in areas such as office buildings, tunnels, and roads.

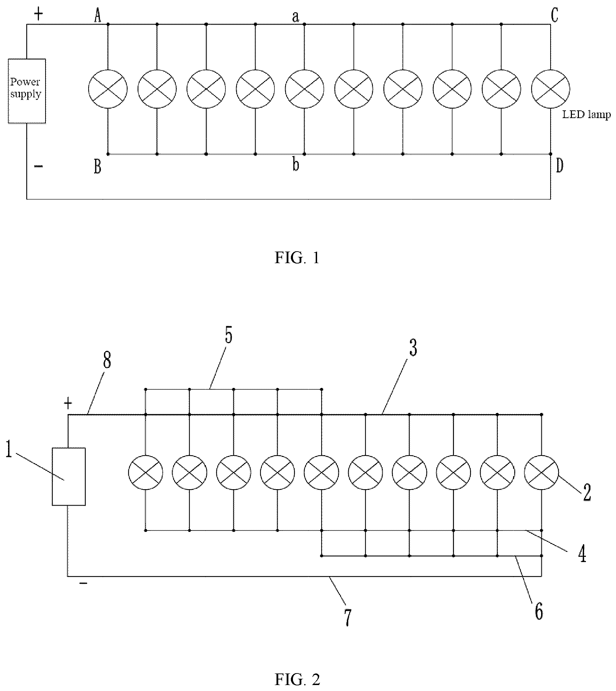

The LED lamps are direct-current lamps, and therefore, their driving power supply uses a direct-current power supply. In a lighting system with numerous LED lamps, a direct-current centralized-driving power supply is often employed. The direct-current centralized-driving power supply is a constant current power supply and is equipped with an AC-DC conversion device that converts an input alternating current into a constant direct current. A plurality of LED lamps are connected in parallel to an output loop of the constant current power supply. During the use of the lighting system, it is often found that due to different total travels of lines from each LED lamp to the constant current power supply, the LED lamps further away from the constant current power supply experience some voltage drop. The inconsistent voltage leads to uneven brightness. Therefore, the applicants applied for a patent entitled "METHOD FOR CONSTANT CURRENT VOLTAGE-SHARING CONNECTION OF LED LAMPS AND DIMMABLE AND LOW-COST LED LAMP" filed on August 2, 2018. This patent solved the problem of voltage drop in an LED lamp at a distal end of a constant current power supply. However, it was later found during use that the voltage of an intermediate LED lamp is slightly lower than those of LED lamps at two ends, resulting in a new voltage drop problem. For example, in FIG. 1, U_{AB} is approximately equal to a voltage U_{CD} between C and D, while a voltage U_{ab} between a and b is slightly smaller than U_{AB}.

### SUMMARY

To solve at least one of the above-mentioned problems in the prior art, that is, to solve the problem of voltage drop in an intermediate LED lamp, a first aspect of the present invention provides a direct-current centralized-driving lighting system, including a constant current power supply, a positive electrode connection wire, a negative electrode connection wire, a positive electrode wire I, a negative electrode wire I, a positive electrode wire II, and a negative electrode wire II, where a positive electrode of the constant current power supply is connected to the positive electrode wire I via the positive electrode connection wire, a negative electrode of the constant current power supply is connected to the negative electrode wire II via the negative electrode connection wire, the positive electrode wire II is connected in parallel to the positive electrode wire I, and the negative electrode wire II is connected in parallel to the negative electrode wire I.

In a technical solution of the lighting system, a plurality of LED lamps are connected in parallel between the positive electrode wire I and the negative electrode wire I.

In a technical solution of the lighting system, a loop formed by the constant current power supply, the positive electrode connection wire, and the positive electrode wire I includes a first area, where the first area includes an area from an LED lamp closest to the constant current power supply to an intermediate LED lamp among the plurality of LED lamps, the positive electrode wire II is connected in parallel to the positive electrode wire I in the first area, and a positive electrode of each LED lamp in the first area is connected to the positive electrode wire II.

In a technical solution of the lighting system, a loop formed by the constant current power supply, the negative electrode connection wire, and the negative electrode wire I includes a second area, where the second area includes an area from the intermediate LED lamp among the plurality of LED lamps to an LED lamp farthest from the constant current power supply, the negative electrode wire II is connected in parallel to the negative electrode wire I in the second area, and a negative electrode of each LED lamp in the second area is connected to the negative electrode wire II.

In a technical solution of the lighting system, the negative electrode of the LED lamp farthest from the constant current power supply is connected to an end of the negative electrode wire II.

In a technical solution of the lighting system, the negative electrode of the constant current power supply is connected to the negative electrode of the LED lamp farthest from the constant current power supply.

In a technical solution of the lighting system, the negative electrode of the constant current power supply is connected to a middle portion of the negative electrode wire II via the negative electrode connection wire.

A second aspect of the present invention provides a direct-current centralized-driving lighting system, including a constant current power supply, LED lamps, a positive electrode wire I, a negative electrode wire I, a positive electrode wire II, a negative electrode wire II, a positive electrode connection wire, and a negative electrode connection wire, where a plurality of LED lamps are arranged and are connected in parallel between the positive electrode wire I and the negative electrode wire I, a positive electrode of the constant current power supply is connected to the positive electrode wire I via the positive electrode connection wire, and a negative electrode of the constant current power supply is connected to the negative electrode wire II via the negative electrode connection wire;

taking an LED lamp closest to the constant current power supply as a first LED lamp, an area from the first LED lamp to an intermediate LED lamp refers to a first area, an area from the intermediate LED lamp to a last lamp refers to a second area, the positive electrode wire II is connected in parallel to the positive electrode wire I in the first area, and a positive electrode of each LED lamp in the first area is connected to the positive electrode wire II; and

the negative electrode wire II is connected in parallel to the negative electrode wire I in the second area, and a negative electrode of each LED lamp in the second area is connected to the negative electrode wire II.

Compare with the prior art, the direct-current centralized-driving lighting system according to the present invention enables the positive electrode wire II and the negative electrode wire II to divert and distribute currents at two ends of the LED lamps connected in parallel to the positive electrode wire II and the negative electrode wire II. This ensures that voltages at two ends of the plurality of LED lamps tend to be balanced under the constant current condition of the LED lamps, effectively reducing the voltage drop in the intermediate LED lamp when the plurality of LED lamps are connected in parallel, and achieving the requirements of constant current and equal voltage sharing of the LED lamps.

### BRIEF DESCRIPTION OF THE DRAWINGS

FIG. 1 is a schematic diagram of a lighting system in the prior art;
FIG. 2 is a schematic diagram of Embodiment 1 of the present invention;
FIG. 3 is another schematic diagram of the Embodiment 1 of the present invention; and
FIG. 4 is a schematic diagram of Embodiment 2 of the present invention.

In the figures, 1. constant current power supply, 2. LED lamp, 3. positive electrode wire I, 4. negative electrode wire I, 5. positive electrode wire II, 6. negative electrode wire II, 7. negative electrode connection wire 8. positive electrode connection wire.

### DETAILED DESCRIPTION OF THE EMBODIMENTS

The technical solutions in the embodiments of the present invention are clearly and completely described below. Clearly, the described embodiments are merely some rather than all of the embodiments of the present invention. All other embodiments obtained by a person of ordinary skill in the art based on the embodiments of the present invention without creative efforts should fall within the protection scope of the present invention.

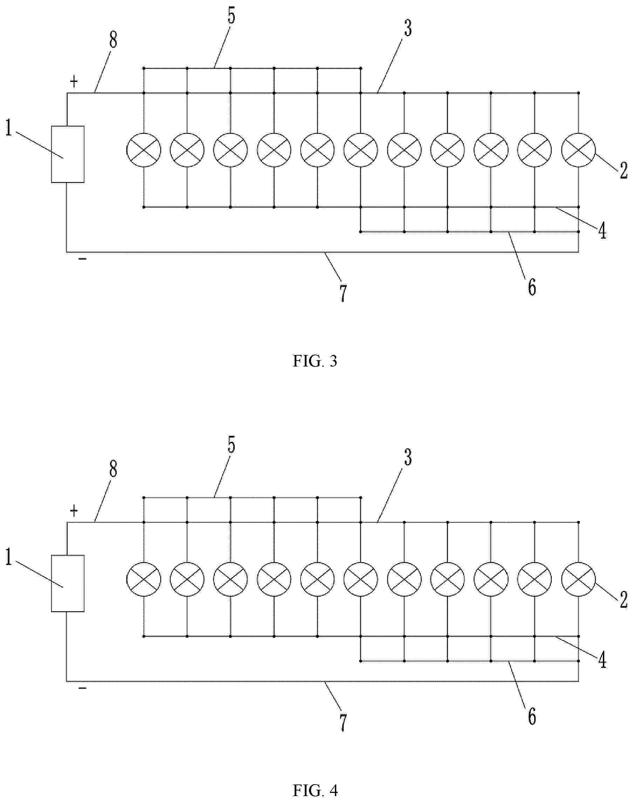

As shown in FIG. 2 to FIG. 4, a direct-current centralized-driving lighting system according to the present invention includes a constant current power supply 1, LED lamps 2, a positive electrode wire I 3, a negative electrode wire I 4, a positive electrode wire II 5, a negative electrode wire II 6, a positive electrode connection wire 8, and a negative electrode connection wire 7, where a positive electrode of the constant current power supply is connected to the positive electrode wire I via the positive electrode connection wire, a negative electrode of the constant current power supply is connected to the negative electrode wire II via the negative electrode connection wire, the positive electrode wire II is connected in parallel to the positive electrode wire I, and the negative electrode wire II is connected in parallel to the negative electrode wire I.

A plurality of LED lamps are connected in parallel between the positive electrode wire I and the negative electrode wire I. The plurality of LED lamps 2 are arranged and are connected in parallel between the positive electrode wire I 3 and the negative electrode wire I 4. A positive electrode of the constant current power supply 1 is connected to the positive electrode wire I 3 via the positive electrode connection wire 8, and a negative electrode of the constant current power supply 1 is connected to the negative electrode wire II 6 via the negative electrode connection wire 7.

A loop formed by the positive electrode connection wire and the positive electrode wire I includes a first area, where the first area includes an area from an LED lamp closest to the constant current power supply to an intermediate LED lamp among the plurality of LED lamps. The positive electrode wire II is connected in parallel to the positive electrode wire I in the first area, and a positive electrode of each LED lamp in the first area is connected to the positive electrode wire II. Specifically, in a loop at a side of the constant current power supply, taking the LED lamp 2 closest to the constant current power supply 1 as a first LED lamp 2, an area from the first LED lamp 2 to the intermediate LED lamp 2 refers to the first area.

A loop formed by the constant current power supply, the negative electrode connection wire, and the negative electrode wire I includes a second area, where the second area includes an area from the intermediate LED lamp among the plurality of LED lamps to an LED lamp farthest from the constant current power supply. The negative electrode wire II is connected in parallel to the negative electrode wire I in the second area, and a negative electrode of each LED lamp in the second area is connected to the negative electrode wire II. Specifically, an area from the intermediate LED lamp 2 to a last LED lamp 2 refers to the second area. The positive electrode wire II 5 is connected in parallel to the positive electrode wire I 3 in the first area, and a positive electrode of each LED lamp 2 in the first area is connected to the positive electrode wire II 5. The negative electrode wire II 6 is connected in parallel to the negative electrode wire I 4 in the second area, and a negative electrode of each LED lamp 2 in the second area is connected to the negative electrode wire II 6.

### Embodiment 1

In this embodiment, ten LED lamps 2 are arranged. A positive electrode of each LED lamp 2 is connected to a positive electrode wire I 3, and a negative electrode is connected to a negative electrode wire I 4. A system further includes a positive electrode wire II 5, a negative electrode wire II 6, a negative electrode connection wire 7, and a positive electrode connection wire 8. Taking an LED lamp 2 closest to a constant current power supply 1 as a first LED lamp 2, an area from the first LED lamp 2 to a fifth LED lamp 2 refers to a first area, and an area from the fifth LED lamp 2 to a tenth LED lamp 2 refers to a second area. The positive electrode wire II 5 is connected in parallel to the positive electrode wire I 3 in the first area, and the positive electrode of each LED lamp 2 in the first area is connected to the positive electrode wire II 5, that is, the positive electrodes of the first LED lamp 2 to the fifth LED lamp 2 are connected to the positive electrode wire I 3 and are also connected to the positive electrode wire II 5. The negative electrode wire II 6 is connected in parallel to the negative electrode wire I 4 in the second area, and the negative electrode of each LED lamp 2 in the second area is connected to the negative electrode wire II 6, that is, the negative electrodes of the fifth LED lamp 2 to the tenth LED lamp 2 are connected to the negative electrode wire I 4 and are also connected to the negative electrode wire II 6. A positive electrode of the constant current power supply 1 is connected to the positive electrode wire I 3 via the positive electrode connection wire 8.

The negative electrode of the LED lamp farthest from the constant current power supply is connected to an end of the negative electrode wire II, and a negative electrode of the constant current power supply is connected to the negative electrode of the LED lamp farthest from the constant current power supply. Specifically, the negative electrode of the constant current power supply 1 is connected to a tail end of the negative electrode wire II 6 via the negative electrode connection wire 7, where the tail end refers to an end connected to the last LED lamp 2, that is, the negative electrode of the last LED lamp 2 is connected to the negative electrode wire I 4 and is also connected to the negative electrode wire II 6. Definitely, another connection form is that the negative electrode of the constant current power supply 1 is connected to a middle portion of the negative electrode wire II 6 via the negative electrode connection wire 7, that is, between a head end and the tail end of the negative electrode wire II 6.

### Embodiment 2

In this embodiment, eleven LED lamps 2 are arranged. A positive electrode of each LED lamp 2 is connected to a positive electrode wire I 3, and a negative electrode is connected to a negative electrode wire I 4. Taking an LED lamp 2 closest to a constant current power supply 1 as a first LED lamp 2, an area from the first LED lamp 2 to a sixth LED lamp 2 refers to a first area, and an area from the sixth LED lamp 2 to a last LED lamp 2 refers to a second area. A positive electrode wire II 5 is connected in parallel to the positive electrode wire I 3 in the first area, and a positive electrode of each LED lamp 2 in the first area is connected to the positive electrode wire II 5, that is, the positive electrodes of the first LED lamp 2 to the sixth LED lamp 2 are connected to the positive electrode wire I 3 and are also connected to the positive electrode wire II 5. A negative electrode wire II 6 is connected in parallel to the negative electrode wire I 4 in the second area, and a negative electrode of each LED lamp 2 in the second area is connected to the negative electrode wire II 6, that is, the negative electrodes of the sixth LED lamp 2 to the eleventh LED lamp 2 are connected to the negative electrode wire I 4 and are also connected to the negative electrode wire II 6. A positive electrode of the constant current power supply 1 is connected to the positive electrode wire I 3 via a positive electrode connection wire 8. The negative electrode of the LED lamp farthest from the constant current power supply is connected to an end of the negative electrode wire II, and the negative electrode of the constant current power supply is connected to the negative electrode of the LED lamp farthest from the constant current power supply. Specifically, the negative electrode of the constant current power supply 1 is connected to the tail end of the negative electrode wire II 6 via a negative electrode connection wire 7. Definitely, another similar connection form is that the negative electrode of the constant current power supply 1 is connected to a middle portion of the negative electrode wire II 6 via the negative electrode connection wire 7, that is, between a head end and the tail end of the negative electrode wire II 6.

The above are merely the embodiments of the present invention and do not constitute a limitation on the patent scope of the present invention. Any equivalent structures or equivalent process changes made by using the content of the specification of the present invention, or any direct or indirect applications in other related technical fields, are also included within the protection scope of the patent of the present invention.

## Claims

1. A direct-current centralized-driving lighting system, comprising a constant current power supply, a positive electrode connection wire, a negative electrode connection wire, a positive electrode wire I, a negative electrode wire I, a positive electrode wire II, and a negative electrode wire II, wherein a positive electrode of the constant current power supply is connected to the positive electrode wire I via the positive electrode connection wire, a negative electrode of the constant current power supply is connected to the negative electrode wire II via the negative electrode connection wire, the positive electrode wire II is connected in parallel to the positive electrode wire I, and the negative electrode wire II is connected in parallel to the negative electrode wire I.

2. The system according to claim 1, wherein a plurality of LED lamps are connected in parallel between the positive electrode wire I and the negative electrode wire I.

3. The system according to claim 2, wherein a loop formed by the constant current power supply, the positive electrode connection wire, and the positive electrode wire I comprises a first area, wherein the first area comprises an area from an LED lamp closest to the constant current power supply to an intermediate LED lamp among the plurality of LED lamps, the positive electrode wire II is connected in parallel to the positive electrode wire I in the first area, and a positive electrode of each LED lamp in the first area is connected to the positive electrode wire II.

4. The system according to claim 2, wherein a loop formed by the constant current power supply, the negative electrode connection wire, and the negative electrode wire I comprises a second area, wherein the second area comprises an area from the intermediate LED lamp among the plurality of LED lamps to an LED lamp farthest from the constant current power supply, the negative electrode wire II is connected in parallel to the negative electrode wire I in the second area, and a negative electrode of each LED lamp in the second area is connected to the negative electrode wire II.

5. The system according to claim 4, wherein the negative electrode of the LED lamp farthest from the constant current power supply is connected to an end of the negative electrode wire II.

6. The system according to claim 5, wherein the negative electrode of the constant current power supply is connected to the negative electrode of the LED lamp farthest from the constant current power supply.

7. The system according to claim 4, wherein the negative electrode of the constant current power supply is connected to a middle portion of the negative electrode wire II via the negative electrode connection wire.

8. A direct-current centralized-driving lighting system, comprising a constant current power supply, LED lamps, a positive electrode wire I, a negative electrode wire I, a positive electrode wire II, a negative electrode wire II, a positive electrode connection wire, and a negative electrode connection wire, wherein a plurality of LED lamps are arranged and are connected in parallel between the positive electrode wire I and the negative electrode wire I, a positive electrode of the constant current power supply is connected to the positive electrode wire I via the positive electrode connection wire, and a negative electrode of the constant current power supply is connected to the negative electrode wire II via the negative electrode connection wire;
taking an LED lamp closest to the constant current power supply as a first LED lamp, an area from the first LED lamp to an intermediate LED lamp refers to a first area, an area from the intermediate lamp to the last lamp refers to a second area, the positive electrode wire II is connected in parallel to the positive electrode wire I in the first area, and a positive electrode of each LED lamp in the first area is connected to the positive electrode wire II; and
the negative electrode wire II is connected in parallel to the negative electrode wire I in the second area, and a negative electrode of each LED lamp in the second area is connected to the negative electrode wire II.
